# EUROPEAN PATENT SPECIFICATION

(11) **EP 4 082 980 B1**
(45) Date of publication and mention of the grant of the patent: **19.08.2026**
(21) Application number: 21880368.2
(22) Date of filing: 01.10.2021
(51) Int. Cl.: C03C 25/40, C03C 25/16, C03C 25/70, C01B 33/158, C01B 33/159, C01B 33/152

(54) **METHOD FOR MANUFACTURING AEROGEL BLANKET**
VERFAHREN ZUR HERSTELLUNG EINER AEROGELDECKE
PROCÉDÉ DE FABRICATION D'UNE COUVERTURE D'AÉROGEL

(30) Priority: 15.10.2020 KR 20200133466
(43) Date of publication of application: 02.11.2022
(73) Proprietor: LG Chem, Ltd., Seoul 07336 (KR)
(72) Inventor: KIM, Jong Hun, Daejeon 34122 (KR); KIM, Mi Ri, Daejeon 34122 (KR); BAEK, Se Won, Daejeon 34122 (KR)
(74) Representative: Goddar, Heinz J.
(86) International application number: PCT/KR2021/013539
(87) International publication number: WO 2022/080721

(56) References cited:
- EP-A1- 3 357 864
- EP-A1- 3 431 856
- WO-A1-2020/111763
- KR-A- 20170 062 261
- KR-A- 20180 125 471
- KR-A- 20200 077 261
- KR-B1- 101 938 655
- KR-B1- 101 938 655
- US-A1- 2008 081 014

## Description

### TECHNICAL FIELD

The present invention relates to a method for manufacturing an aerogel blanket, the method including gelling using a non-toxic base catalyst and performing a surface modification process under acid conditions, and to an aerogel blanket manufactured by the manufacturing method.

### BACKGROUND ART

An aerogel is a super-porous, high specific surface area (≥500 m²/g) material having a porosity of about 90-99.9% and a pore size in the range of 1-100 nm, and is a material having excellent properties of ultra-light weight, super thermal insulation, and ultra-low dielectric. Accordingly, research on the development of aerogel materials as well as research on the practical use thereof as transparent insulation materials, environmentally friendly high-temperature insulation materials, ultra-low dielectric thin films for highly integrated devices, catalysts and catalyst carriers, electrodes for super capacitors, and electrode materials for seawater desalination have been actively conducted.

The biggest advantages of the aerogel are that the aerogel has super-insulation properties exhibiting a thermal conductivity of 0.300 W/m·K or less, which is lower than that of a conventional organic thermal insulation material such as Styrofoam, and that fire vulnerability and the generation of harmful gases in case of occurrence of fire which are fatal weaknesses of the organic thermal insulation material can be solved.

In general, the aerogel is produced by preparing a hydrogel from a precursor material, and removing a liquid component inside the hydrogel without destroying a microstructure. An aerogel may be typically classified into three types, i.e., powder, granule, and monolith, and the silica aerogel is generally produced in the form of powder.

The above powder-type silica aerogel may be made into a composite with fibers and be commercialized in the form of an aerogel blanket or an aerogel sheet. Such an aerogel blanket and an aerogel sheet may be bent, folded, or cut in any size or shape due to the flexibility thereof. Therefore, the powder-type silica aerogel may be applied not only to industrial applications such as thermal insulation panels for LNG carriers, industrial insulation materials, spacesuits, transportation, vehicles, and insulation materials for electric power production, but also to household goods such as jackets and sports shoes. In addition, when an aerogel is used in fireproof doors as well as roofs and floors in housing such as an apartment, there is a great effect in fire prevention.

Specifically, an aerogel blanket in the present specification is a concept referring to a material in which an aerogel is impregnated on a substrate for a blanket such as a fiber, and a method for manufacturing the aerogel blanket is divided into a gel casting method and a method for preparing aerogel powder or granules and then depositing the same on a substrate for a blanket using a binder.

Products manufactured by the gel casting method account for the majority of the usage to date because of the good physical properties thereof, and currently, a gel casting method using a roll-to-roll technique is known as a commercially available technology. At this time, ammonia is usually used as a catalyst used in gelation, and ammonia is widely used because of its excellent aerogel physical properties capable of effectively preventing the collapse of a gel structure.

However, since the ammonia catalyst is a weak base component, a large amount thereof should be used to secure gel time and ensure physical properties in a process, process stability is lowered due to toxic gas components, and some of the toxic gas components remain even in a final product, which causes a problem. Thus, in order to ensure process stability and product eco-friendliness, it is necessary to develop a process and a product which may secure physical properties at a level equivalent to or higher than that of the ammonia catalyst while removing toxic substances throughout the process.

### [Prior Art Document]

### [Patent Document]

(Patent Document 1) KR10-2012-0070948A
EP 3431856A1 discloses a method of forming a silica aerogel blanket comprising the steps: (i) preparing a catalyzed silica sol by treating a silica sol with hydrochloric acid, (ii) impregnating and gelling this silica sol on a substrate so as to obtain a wet gel-fiber composite, (iii) hydrophobizing the silica aerogel blanket by treatment with hydrochloric acid and siloxane, and (iv) drying the hydrophobized silica aerogel blanket.
KR101938655B1 discloses a method of forming a silica aerogel blanket by preparing a base catalyzed silica sol, impregnating and gelling on a substrate and drying the obtained aerogel blanket. The blanket may undergo a hydrophobization step.
WO2020/111763A1 discloses the use of a base catalyst, such as sodium base catalyst, for the preparation of silica aerogel blankets.

### DISCLOSURE OF THE INVENTION

### TECHNICAL PROBLEM

An aspect of the present invention is to provide a method for manufacturing an aerogel blanket by a gel casting method, wherein gelation is performed by catalyzing a sol using a non-toxic sodium-based base catalyst in a gelation process, and a surface modification process is performed under acid conditions, so that even when atmospheric pressure drying is performed, a gel structure is not collapsed due to shrinkage, and thus, an effect of saving cost may be expected compared to supercritical drying. Also, safety may be secured since a toxic catalyst is replaced with a non-toxic material, and sufficient thermal conductivity and an improved degree of hydrophobicity may be ensured since the collapse of the gel structure is suppressed through the surface modification under acidic conditions.

Another aspect of the present invention is to provide a high thermal insulation aerogel blanket manufactured by the method for manufacturing an aerogel blanket.

### TECHNICAL SOLUTION

According to an aspect of the present invention, there is provided a method for manufacturing an aerogel blanket, wherein the method includes 1) mixing a silica sol and a sodium-based base catalyst to obtain a catalyzed silica sol, 2) impregnating and gelling the catalyzed silica sol in a substrate for a blanket to obtain a wet gel-fiber composite, 3) introducing an acidic surface modification solution containing a surface modifier and a chlorine-based acid-induced aqueous solution to the wet gel-fiber composite to hydrophobize the wet gel-fiber composite, and 4) drying the hydrophobized wet gel-fiber composite.

### ADVANTAGEOUS EFFECTS

The manufacturing method of the present invention is advantageous in that gelation is performed by catalyzing a sol using a non-toxic sodium-based base catalyst in a gelation process, and a surface modification process is performed under acid conditions, so that even when atmospheric pressure drying is performed, a gel structure is not collapsed due to shrinkage, and thus, an effect of saving cost may be expected compared to supercritical drying. Also, safety may be secured since a toxic catalyst is replaced with a non-toxic material, and sufficient thermal conductivity and an improved degree of hydrophobicity may be ensured since the collapse of the gel structure is suppressed through the surface modification under acidic conditions.

### MODE FOR CARRYING OUT THE INVENTION

Hereinafter, the present invention will be described in more detail to facilitate understanding of the present invention. In this case, it will be understood that words or terms used in the specification and claims shall not be interpreted as having the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

### 1. Method for manufacturing aerogel blanket

A method for manufacturing an aerogel blanket according to an embodiment of the present invention includes 1) mixing a silica sol and a sodium-based base catalyst to obtain a catalyzed silica sol, 2) impregnating and gelling the catalyzed silica sol in a substrate for a blanket to obtain a wet gel-fiber composite, 3) introducing an acidic surface modification solution containing a surface modifier and a chlorine-based acid-induced aqueous solution to the wet gel-fiber composite to hydrophobize the wet gel-fiber composite, and 4) drying the hydrophobized wet gel-fiber composite.

The manufacturing method is to replace a toxic gelation catalyst used in a typical gel casting method, thereby solving problems caused by using the toxic gelation catalyst. Specifically, the method is characterized in that a toxic ammonia-based catalyst is replaced with a non-toxic sodium-based base catalyst, and a surface modification process is performed under acid conditions in order to achieve the thermal conductivity and degree of hydrophobicity which may be implemented when an ammonia catalyst is used.

More specifically, the toxic ammonia-based catalyst is a weak base, and thus, a large amount thereof should be used to secure gel time and physical properties, but due to a relatively low pH during a process, there is no gel structure collapse problem caused by shrinkage during drying even when a solvent is evaporated. In contrast, a non-toxic sodium-based base catalyst is a strong base, and thus, due to an increased pH during a process, there is a gel structure collapse problem during drying. In order to solve this problem, a surface modification process is acidified to neutralize the sodium-based base catalyst, which is a strong base, so that a pH is lowered through the generation of salts, thereby preventing the collapse of a gel structure. Therefore, even when a non-toxic catalyst is used, an aerogel blanket having high thermal conductivity and a high degree of hydrophobicity may be manufactured.

In addition, when the sodium-based base catalyst is used, the shrinkage phenomenon occurs severely during drying, so that it is impossible to apply an atmospheric pressure drying process, and precise control is required to prevent the shrinkage from occurring through supercritical drying. However, in the manufacturing method, the shrinkage of a gel structure may be controlled through the acidification of the surface modification process, so that it is possible to apply the atmospheric pressure drying process.

Furthermore, since the sodium-based base catalyst is a strong base, only a small amount thereof is required to induce sufficient gelation, and since the surface modification process is acidified, a neutralization reaction is induced by the catalyst, which is a strong based, and the generation of salts during the surface modification, and accordingly, an additional effect of improving the surface modification efficiency may also be expected.

Hereinafter, each step of the method for manufacturing an aerogel blanket of the present invention will be described in detail.

### Step 1: Catalysis process

The step 1) according to an embodiment of the present invention is a step of mixing a silica sol and a sodium-based base catalyst to obtain a catalyzed silica sol.

In the present invention, the catalyzed silica sol may be prepared by mixing a silica sol and a sodium-based base catalyst, and the base catalyst serves to promote gelation in the step 2) by increasing the pH of the silica sol.

The silica sol according to an embodiment of the present invention contains a silica precursor and an organic solvent, and may be prepared by mixing the silica precursor and the organic solvent. In the step 1), the catalyzed silica sol may be prepared by mixing a silica sol and a base catalyst, wherein the silica sol may be prepared by mixing a silica precursor and an organic solvent, and may further contain water and may use a hydrated organic solvent. In addition, the silica precursor may undergo hydrolysis at a low pH to facilitate gelation, and at this time, an acid catalyst may be used to lower a pH.

A silica precursor which may be used for preparing the silica sol may be an alkoxide-based compound containing silicon, specifically, tetraalkyl silicate such as tetramethyl orthosilicate (TMOS), tetraethyl orthosilicate (TEOS), methyl triethyl orthosilicate, dimethyl diethyl orthosilicate, tetrapropyl orthosilicate, tetraisopropyl orthosilicate, tetrabutyl orthosilicate, tetra secondary butyl orthosilicate, tetra tertiary butyl orthosilicate, tetrahexyl orthosilicate, tetracyclohexyl orthosilicate, and tetradodecyl orthosilicate. Among the above, more specifically, the silica precursor according to an embodiment of the present invention may be tetraethyl orthosilicate (TEOS).

In addition, as an acid catalyst which may be further included in the silica sol according to an embodiment of the present invention, any acid catalyst which may allow a pH to be 3 or less may be used without limitation. As an example, hydrochloric acid, nitric acid, or sulfuric acid may be used. At this time, the acid catalyst may be added in an amount which allows the pH of the sol to be 3 or less, and may be added in the form of an aqueous solution dissolved in an aqueous solvent.

The silica precursor according to an embodiment of the present invention may be in a state in which the silica precursor is hydrolyzed through a preliminary reaction with the acid catalyst. For example, a tetraalkyl silicate such as tetramethyl orthosilicate (TMOS), tetraethyl orthosilicate (TEOS), methyl triethyl orthosilicate, dimethyl diethyl orthosilicate , tetrapropyl orthosilicate, tetraisopropyl orthosilicate, tetrabutyl orthosilicate, tetra secondary butyl orthosilicate, tetra tertiary butyl orthosilicate, tetrahexyl orthosilicate, tetracyclohexyl orthosilicate, and tetradodecyl orthosilicate in a pre-hydrolyzed state by reacting with an acid catalyst may be directly applied.

The silica precursor may be used in an amount which allows the content of silica (SiO₂) contained in a silica sol to be 3 wt% to 30 wt%. If the content of the silica is less than 3 wt%, the content of a silica aerogel in a blanket to be finally produced is too low to achieve a desired level of thermal insulation effect. If the content of the silica is greater than 30 wt%, due to excessive formation of a silica aerogel, the mechanical properties of a blanket, the flexibility thereof in particular, may deteriorate.

In addition, as an organic solvent which may be used for preparing the silica sol of the present invention, any material which has excellent compatibility with a silica precursor and water may be used without limitation. Specifically, a polar organic solvent may be used, and more specifically, an alcohol may be used. Here, the alcohol may specifically be a monohydric alcohol such as methanol, ethanol, isopropanol, and butanol; or a polyhydric alcohol such as glycerol, ethylene glycol, propylene glycol, diethylene glycol, dipropylene glycol, and sorbitol, and any one thereof or a mixture of two or more thereof may be used. Among these, when considering the miscibility thereof with water and an aerogel to be prepared, the alcohol may be a monohydric alcohol having 1 to 6 carbon atoms, such as methanol, ethanol, isopropanol, and butanol.

The organic solvent as described above may be used in an appropriate amount in consideration of the content of an aerogel to be finally prepared.

The silica sol according to an embodiment of the present invention may include a silica precursor and water in a molar ratio of 1:4 to 1:1. In addition, a silica precursor and an organic solvent may be included in a weight ratio of 1:2 to 1:9, and preferably, may be included in a weight ratio of 1:4 to 1:6. When a silica precursor satisfies the above molar ratio or weight ratio with water and an organic solvent, the production yield of an aerogel may further increase, so that there is an effect of improving thermal insulation performance. Specifically, the ratio may be adjusted within the above range such that the density of a silica precursor in a silica sol is 50 kg/m³ to 100 kg/m³, preferably 50 kg/m³ to 80 kg/m³, more preferably 60 kg/m³ to 80 kg/m³.

According to an embodiment of the present invention, the sodium-based base catalyst may be an inorganic base. Specifically, the sodium-based base catalyst may be sodium hydroxide (NaOH), or sodium silicate, and may be an inorganic base containing sodium, which is commonly referred to as a strong base.

A material containing amine or ammonia such as ammonia (NH₃), ammonium hydroxide (NH₄OH; ammonia water), tetramethylammonium hydroxide (TMAH), tetraethylammonium hydroxide (TEAH), tetrapropylammonium hydroxide (TPAH), tetrabutylammonium hydroxide (TBAH), methylamine, ethylamine, isopropylamine, monoisopropylamine, diethylamine, diisopropylamine, dibutylamine, trimethylamine, triethylamine, triisopropylamine, tributylamine, choline, monoethanolamine, diethanolamine, 2-aminoethanol, 2-(ethyl amino) ethanol, 2-(methyl amino) ethanol, N-methyl diethanolamine, dimethylaminoethanol, diethylaminoethanol, nitrilotriethanol, 2-(2-aminoethoxy) ethanol, 1-amino-2-propanol, triethanolamine, monopropanolamine, dibutanolamine, or pyridine, which has been commonly used, has a problem of generating ammonia during a process, thereby emitting a toxic gas, and may cause serious problems with safety. Since its impact on an operator and its impact on a product user when included in a product have become increasingly problematic, there is a demand for such an amine-based or ammonia-based catalyst to be replaced.

In the present invention, since a non-toxic strong base is used as the sodium-based base catalyst as described above, gelation may be achieved only with a small amount of a catalyst compared to when a typical catalyst is used, and thus, gelation efficiency may be improved. There is also an advantage in that toxic substances are removed during a process, and gel time may be reduced to increase productivity.

The sodium-based base catalyst may be included in an amount which allows the pH of the sol to be 9.0 to 11.0. When the pH of the catalyzed silica sol is within the above range, productivity may be increased due to increase in gelation efficiency and reduction in gel time in the step 2) to be described later, and there is an advantage in that toxic substances disappear during the process. In addition, since the sodium-based base catalyst may be precipitated when introduced in a solid phase, it may be preferable that the sodium-based base catalyst is added in the form of a solution diluted by an aqueous solvent or the above-described organic solvent.

At this time, the dilution ratio of the sodium-based base catalyst and the organic solvent, specifically an alcohol, may be 1:4 to 1:100 based on volume. In addition, the sodium-based base catalyst may have a concentration of sodium ions of 1 mmol/L to 100 mmol/L, preferably 5 mmol/L to 50 mmol/L, based on the volume of the catalyzed silica sol, and the degree of dilution may be applied at an appropriate level required in consideration of the reactivity of a strong base. The concentration of sodium ions is preferably applied within the above range as a degree capable of promoting a reaction as a catalyst.

Meanwhile, the sodium-based base catalyst may be an aqueous solution having a concentration of 10% to 50%, preferably 20% to 40%.

According to an embodiment of the present invention, the catalyzed silica sol may further be added with an additive if necessary. At this time, as the additive, all known additives which may be added when manufacturing an aerogel may be applied, and for example, an additive such as an opacifying agent, and flame retardant may be used.

### Step 2: Impregnation and gelation process

The step 2) according to an embodiment of the present invention is to manufacture a wet gel-fiber composite (a wet gel blanket), and is a step of impregnating a catalyzed silica sol in a substrate for a blanket, and then gelling the catalyzed silica sol impregnated in the substrate for blanket.

The step 2) is to impregnate a catalyzed silica sol in a substrate for a blanket, wherein an impregnation tank for impregnating a catalyzed sol in a substrate for a blanket is used through introducing the catalyzed silica sol prepared in the step 1) above and a substrate for a blanket into a reaction vessel, or a roll-to-roll technique in which a substrate for blanket moves on a conveyor belt and a catalyzed silica sol is sprayed on the moving substrate for blanket is used, or various methods may be applied, such as a combination of the two methods.

As used in the present invention, the term "impregnation" indicates that it is achieved by introducing a catalyzed sol having fluidity to a substrate for a blanket, and may indicate that the catalyzed sol penetrates pores inside the substrate for a blanket.

As long as the step 2) according to an embodiment of the present invention is a step of introducing a substrate for a blanket and a catalyzed silica sol to a reaction vessel, the introduction order thereof is not particularly limited. Specifically, in the Step 2), the introduction may be performed by any one method among a method for introducing a substrate for a blanket to a reaction vessel and then introducing a catalyzed silica sol thereto, a method for introducing a catalyzed silica sol into a reaction vessel and then introducing a substrate for a blanket thereto, and a method for introducing a substrate for a blanket while introducing a catalyzed silica sol to a reaction vessel.

As another example, in the step 2), a method for impregnating a silica sol in a substrate for a blanket by spraying the silica sol on the substrate for a blanket while the substrate for blanket is moving on a conveyor belt, or a method of combining an impregnation tank and a roll-to-roll method may be applied to impregnate and gel a catalyzed silica sol in a substrate for a blanket.

Also, the substrate for a blanket according to an embodiment of the present invention may specifically be a porous substrate in terms of improving the thermal insulation properties of an aerogel blanket. When a porous substrate for a blanket is used, a catalyzed sol is allowed to easily penetrate the substrate, and thus, forms an aerogel uniformly inside the substrate for a blanket, so that an aerogel blanket manufactured may have excellent thermal insulation properties.

The substrate for a blanket which may be used according to an embodiment of the present invention may be a film, a sheet, a net, a fiber, a foam, a non-woven body, or a laminate of two or more layers thereof. Also, according to the use of the substrate for a blanket, surface roughness may be formed or patterned on the surface thereof. More specifically, the substrate for a blanket may be a fiber capable of further improving thermal insulation performance by including a space or a void through which an aerogel may be easily inserted into the substrate for a blanket. Furthermore, the substrate for a blanket may preferably have low thermal conductivity.

Specifically, the substrate for a blanket may be polyamide, polybenzimidazole, polyaramid, an acryl resin, a phenol resin, polyester, polyetheretherketone (PEEK), polyolefin (e.g., polyethylene, polypropylene, or a copolymer thereof), cellulose, carbon, cotton, wool, hemp, a non-woven fabric, a glass fiber, or ceramic wool. More specifically, the substrate for a blanket in the present invention may be a glass fiber.

When the silica sol catalyzed in the step 1) is introduced, in order to improve the bonding between the substrate for a blanket and the catalyzed silica sol, the substrate for a blanket may be lightly pressed down to achieve sufficient impregnation. Thereafter, the substrate for a blanket may be pressed at a constant pressure to a predetermined thickness to remove excess sol, thereby shortening drying time.

According to an embodiment of the present invention, the catalyzed silica sol may be introduced in an amount of 80 vol% to 120 vol%, preferably 90 vol% to 110%, based on the volume of the substrate for a blanket. In addition, preferably, the introduction amount of the substrate for a blanket and the catalyzed silica sol may satisfy the above introduction ratio therebetween under the conditions satisfying the introduction amount with respect to the reaction vessel. When a catalyzed silica sol satisfies the introduction ratio (introduction amount) with respect to the volume of silica a substrate for a blanket, the catalyzed silica sol is more uniformly impregnated in the substrate for a blanket, so that an aerogel blanket to be manufactured may have more uniform physical properties, and since the catalyzed silica sol may all be impregnated in the substrate for a blanket, it is possible to prevent the loss of raw materials and prevent a problem in which the catalyzed silica sol is gelled alone.

According to an embodiment of the present invention, the catalyzed silica sol is impregnated in a substrate for a blanket, and thus, gelled, and accordingly, a wet gel-fiber composite is obtained. The gelation may be to form a network structure from a catalyzed silica sol, wherein the network structure may represent a planar mesh structure in which specific polygons having one or more types of atomic arrangement are linked to each other, or a structure in which specific polyhedrons share their vertices, edges, and faces with each other to form a three-dimensional skeleton structure.

According to an embodiment of the present invention, the gelation may be induced by impregnating a substrate for a blanket with the catalyzed silica sol and then leaving the impregnated substrate for a blanket to stand for 0.5 hours to 2.0 hours, and the gelation may be performed within a temperature range of 20°C to 50°C, preferably at room temperature.

In according to an embodiment of the present invention, after the step 1) is completed, the step 2) may be initiated to sequentially perform the step 1) and the step 2).

According to another embodiment of the present invention, the step 2) may be initiated before the step 1) is completed, and when the step 2) is performed before the completion of the step 1) as described above, a catalyzed sol may all be introduced to a reaction vessel until gelation is completed, specifically before the gelation is completed.

### Additional processes: Aging process

The manufacturing method according to an embodiment of the present invention may additionally perform an aging step as a process for allowing a chemical change to be completely achieved by leaving the wet gel-fiber composite to stand at a suitable temperature. The aging step may more firmly form the formed network structure, and thus, may enhance the mechanical stability of an aerogel blanket of the present invention.

The aging step should be performed in a suitable temperature range to enhance an optimal pore structure. The aging step of the present invention may be performed by leaving the wet gel-fiber composite to stand for 3 hours to 50 hours at a temperature of 30°C to 70°C. When the aging temperature is within the above range, productivity may be ensured due to an appropriate level of aging, and the loss of a solvent due to the evaporation of an organic solvent may be prevented. In addition, the aging time in the above range is a range which may satisfy thermal conductivity and a degree of hydrophobicity, and may be preferably 6 hours to 48 hours, more preferably 18 hours to 48 hours.

In the above aging step, an additional catalyst may not be introduced. When an additional basic catalyst is introduced in the aging step, the pH of the wet gel-fiber composite may become too high, and accordingly, there may be a problem in which the collapse of a gel structure due to shrinkage becomes severe in a drying process, and there is a possibility in that the fiber itself may be damaged. In addition, when an acid catalyst is additionally introduced, a neutralization reaction may occur in the wet gel-fiber composite during the aging process, and accordingly, a silanol group with which a hydrophobic group should be substituted is lost, so that surface modification efficiency may be deteriorated. Therefore, it may be preferable that an additional catalyst is not introduced in the aging step.

In addition, according to an embodiment of the present invention, the aging step may be performed in a separate reaction vessel after a gelled silica wet gel-fiber composite is recovered, or may be performed inside a reaction vessel in which the gelation has been performed. In terms of the efficiency of a process and the simplification of equipment, the aging step may be preferably performed in the reaction vessel in which the gelation has been performed.

### Step 3: Surface modification process

According to an embodiment of the present invention, the step 3) is a step of introducing an acidic surface modification solution containing a surface modifier and a chlorine-based acid-induced aqueous solution to the wet gel-fiber composite prepared in the step 2) to hydrophobize the wet gel-fiber composite.

When a hydrophilic functional group present on the surface of an aerogel is substituted with a hydrophobic functional group, the shrinkage of pores due to the surface tension of a solvent during the drying of the aerogel may be minimized by the repulsive force between hydrophobic functional groups. The dried aerogel maintains low thermal conductivity immediately after being dried. However, since a hydroxy functional group present on the surface of an aerogel, for example, when the aerogel is a silica aerogel, a hydrophilic silanol group (Si-OH) present on the surface of silica absorbs water in the air, there is a disadvantage in that thermal conductivity is gradually increased. Therefore, in order to maintain low thermal conductivity, there is a need to modify the surface of the aerogel to be hydrophobic.

Accordingly, the surface modification according to an embodiment of the present invention may be performed by a surface modifier including a polar solvent and an organosilane compound.

As the polar solvent, methanol, ethanol, or isopropyl alcohol may be used, and as the organosilane compound, trimethylchlorosilane (TMCS), hexamethyldisilazane (HMDS), methyltrimethoxysilane (MTMS), trimethylethoxysilane (TMES), ethyltriethoxysilane (ETES), or phenyltriethoxysilane (PTES) may be used. Preferably, trimethylethoxysilane or hexamethyldisilazane may be used.

The surface modification is preferably performed by mixing the polar solvent in a volume ratio of 0.5 to 10.0 with respect to the wet gel, and mixing the organosilane compound in a volume ratio of 0.1 to 10.0 with respect to the wet gel. A surface modifier containing the organosilane compound and the polar solvent may be mixed in a volume ratio of 0.5 to 10.0 with respect to the wet gel. When the volume ratio of the organosilane compound with respect to the wet gel is less than 0.1, reaction time becomes too long, which may cause surface modification efficiency to decrease. When the volume ratio of the organosilane compound is greater than 10.0, there is a problem of cost rise, and an unreacted surface modifier may cause shrinkage during drying.

The organosilane compound and the polar solvent may be mixed in the above volume ratio, and in the surface modifier in a mixed state, the organosilane compound may be included in 10 vol% to 60 vol% based on the total volume of the surface modifier. The content of the organosilane compound in the surface modifier may affect the degree of hydrophobicity and thermal conductivity, and as the content is higher, the hydrophobicity and the thermal conductivity may be improved. When the content is greater than 60 vol%, there is no additional increase in surface modification efficiency, except the amount of waste organosilane compound increases, so that it is necessary to adjust the amount appropriately within the above range. In addition, in order to achieve the above-described effects while minimizing the deviation of the surface modification efficiency of a final aerogel blanket, that is, the degree of hydrophobicity, depending on the introduction amount of an acid aqueous solution, the content may preferably be 15 vol% to 50 vol%, more preferably 25 vol% to 50 vol%, and even more preferably 25 vol% to 50 vol%.

Also, according to an embodiment of the present invention, the acidic surface modification solution may additionally include a chlorine-based acid-induced aqueous solution in addition to the surface modifier. The chlorine-based acid-induced aqueous solution may be an acid diluted in an aqueous solution state, may be diluted to a concentration of 10 wt% to 50 wt%, and preferably may be 20 wt% to 40 wt%. The acidic surface modification solution is a mixture of a surface modifier, which is an organosilane compound diluted using the polar solvent and a chlorine-based acid in an aqueous solution state, and the number of moles of the acid in the acidic surface modification solution may be determined based on the sodium-based base catalyst of the step 1).

Specifically, the number of moles of the acid in the acidic surface modification solution may be 0.5 equivalents to 15 equivalents, preferably 1 equivalent to 10 equivalents, with respect to the number of moles of sodium ions in the sodium-based base catalyst in an equivalent ratio. When the number of moles of the acid satisfies the above range, the pH may be set to a polar acid level so that the conditions of a surface modification reaction may become acid conditions, and accordingly, the collapse of a gel structure which occurs under neutral to basic conditions may be prevented, and the acidic surface modification solution may serve as a medium for promoting the surface modification reaction.

More specifically, taking a case in which trimethylethoxysilane (TMES) is used as a surface modifier for example, when the acid aqueous solution is included in a surface modification solution, TMES reacts with a reaction site of (Si³⁺) (3OH⁻) on the surface of a silica gel to undergo surface modification. Competitively, TMES reacts with water and forms hexadimethylsiloxane (HMDSO) and ethanol, and hexadimethylsiloxane has a very stable structure, and thus, cannot cause a surface modification reaction with the surface of the silica gel, so the surface modification efficiency is lowered, which may cause the collapse of a gel structure due to shrinkage in a drying process. However, when a chlorine-based acid-induced aqueous solution is introduced, for example, when a hydrochloric acid aqueous solution is introduced, a reaction between TMES and hydrochloric acid may occur with a competitive advantage over a reaction between TMES and water, and through the reaction between TMES and hydrochloric acid, trimethylchlorosilane (TMCS) may be formed. Since TMCS is an organosilane compound serving as a surface modifier capable of performing a surface modification reaction in the same way as TMES, the surface modification efficiency may be maximized. That is, since the formation of HMDSO and ethanol, which deteriorates the surface modification efficiency, is suppressed, and at the same time, a reaction for generating a surface modifier is performed, the surface modification efficiency may be maximized compared to when the chlorine-based acid-induced aqueous solution is not added. In such a mechanism, as described above, the degree of activation may vary depending on the equivalent ratio of an acid to a base catalyst, and when an acid is introduced to an acidic surface modification solution to satisfy the above-described range, the effect may be maximized.

The chlorine-based acid-induced aqueous solution may specifically include a chlorine-based acid, or may generate a chlorine-based acid in the aqueous solution. For example, the chlorine-based acid-induced aqueous solution may be an aqueous solution containing hydrochloric acid, trimethylchlorosilane, dimethyldichlorosilane, or methyltrichlorosilane. When a nitrogen-based acid or a sulfur-based acid, which is not a chlorine-based acid, is used, TMCS cannot be formed by the above-described mechanism, and thus, the surface modification efficiency may be lowered, and accordingly, the degree of hydrophobicity may be reduced.

In the manufacturing method according to an embodiment of the present invention, the surface modification process of the step 3) may be performed for 10 hours to 50 hours, preferably 15 hours to 50 hours, more preferably 18 hours to 48 hours, even more preferably 24 hours to 48 hours. The performance time of the surface modification process is to obtain an appropriate degree of hydrophobicity, and in order to implement the thermal conductivity and the degree of hydrophobicity of a final aerogel blanket above a predetermined level, it is preferable to perform the surface modification process within the above range.

The surface modification step may be performed in a separate reaction vessel after recovering a gelled or aged silica wet gel-fiber composite, or may be performed inside a reaction vessel in which gelation or aging has been performed. In terms of the efficiency of a process and the simplification of equipment, the aging and surface modification steps may be preferably performed in the reaction vessel in which gelation or aging has been performed.

After performing the above surface modification step, a hydrophobic wet gel-fiber composite may be obtained.

### Additional processes: Washing process

The manufacturing method according to an embodiment of the present invention may further perform a washing step after performing the surface modification step and before performing a drying step. The washing may be to remove impurities (sodium ions, unreacted products, by-products, salts, etc.) generated during a reaction so as to obtain a high-purity hydrophobic silica aerogel.

The washing may be washing using ethanol or ethanol and an acid aqueous solution. In the surface modification process, salts may be generated by a neutralization reaction between the sodium-based base catalyst used in gelation and the acidic surface modification solution, and through the generation of salts, sodium ions may be easily removed. When washing by the neutralization reaction is performed with an acid aqueous solution, the effect of removing impurities may be further maximized by inducing the generation of salts by the neutralization reaction performed in the surface modification step, in which case, the degree of hydrophobicity may be further improved.

The acid aqueous solution may be the same as the acid aqueous solution contained in the acidic surface modification solution in the surface modification process, and the washing may be repeated several times. However, in consideration of the possibility in that a hydrophobic group may be separated when the washing is repeated too many times, it is necessary to control the washing appropriately.

### Step 4: Drying process

The hydrophobized hydrophobic wet gel-fiber composite which has undergone the step 3) according to an embodiment of the present invention is subjected to a drying step to manufacture a hydrophobic aerogel blanket.

The drying step according to an embodiment of the present invention may be performed through a process for removing a solvent while maintaining the pore structure of an aged gel, and the drying step may be performed by a supercritical drying process or an atmospheric pressure drying process.

The supercritical drying process may be performed using supercritical carbon dioxide. Carbon dioxide (CO₂) is in a gaseous state at room temperature and atmospheric pressure. However, when a temperature and pressure exceed a predetermined temperature and pressure limit called a supercritical point, the evaporation process does not occur so that carbon dioxide becomes to be in a critical state in which gas and liquid cannot be distinguished. Carbon dioxide in a critical state is referred to a supercritical carbon dioxide.

A supercritical carbon dioxide has a molecular density close to that of a liquid, however, has a low viscosity, thereby having properties close to those of gas. Therefore, a supercritical carbon dioxide has a high diffusion rate and a high thermal conductivity so that drying efficiency thereof is high, and drying process time may be shortened.

Specifically, the supercritical drying process performs a solvent substitution process in which an aged wet gel blanket is placed into a supercritical drying reactor, and then CO₂ in a liquid state is filled therein, followed by substituting an alcohol solvent inside the wet gel with CO₂. Thereafter, the temperature is raised to 40°C to 70°C at a predetermined temperature raising rate, specifically, 0.1 °C/min to 1.0 °C/min, and the pressure which is greater than a pressure at which carbon dioxide becomes to be a supercritical state, specifically, the pressure of 100 bar to 150 bar is maintained to allow the carbon dioxide to remain in the supercritical state for a predetermined amount of time, specifically for 20 minutes to 1 hour. In general, carbon dioxide becomes to be in a supercritical state at a temperature of 31°C and pressure of 73.8 bar. After carbon dioxide is maintained at a predetermined temperature and a predetermined pressure to remain in a supercritical state for 2 hours to 12 hours, more specifically, 2 hours to 6 hours, the pressure is generally lowered to complete the supercritical drying process to manufacture an aerogel blanket.

Also, the atmospheric pressure drying process may be performed according to a typical method such as hot air drying, IR drying, and oven drying at a temperature of 70°C to 200°C and under an atmospheric pressure (1±0.3 atm).

According to an embodiment of the present invention, in the manufacturing method, it is preferable that atmospheric pressure drying is performed. Although supercritical drying may be performed, high-pressure equipment is required in the case of supercritical drying, and it is difficult to control various process conditions, which greatly affects product price increase. However, supercritical drying has been applied in that it is an efficient method to remove a solvent without collapse of a gel structure. However, when the manufacturing method of the present invention is applied, since it is possible to prevent the collapse of a gel structure even when atmospheric pressure drying is applied without applying supercritical drying, there is an advantage in that it is not necessary to perform a supercritical drying process which requires high-pressure equipment, and an effect corresponding to the effect of supercritical drying may be obtained with atmospheric pressure drying alone.

As a result of the above drying process, a blanket including a porous aerogel having nano-sized pores may be manufactured. Particularly, the silica aerogel according to an embodiment of the present invention has excellent physical properties, low tap density and high porosity in particular, together with a high degree of hydrophobicity, and a silica aerogel-containing blanket including the same has excellent mechanical flexibility together with low thermal conductivity.

In addition, before or after the drying process, a compression process to control the thickness and to make the internal structure and surface shape of a blanket uniform, a molding process to have a suitable shape or morphology according to use, or a lamination process for laminating a separate functional layer may be further performed.

When an aerogel blanket is manufactured according to the manufacturing method as described above, processes such as a solvent replacement process to remove impurities and a process of exchanging with a solvent which is easily volatilized may not be performed, making it easy to simplify a process, and since it is possible to provide an aerogel blanket with sufficiently excellent physical properties without performing the washing process, which is also an additional process, a degree of freedom in process design for process simplification may be sufficiently secured.

### 3. Aerogel blanket

The present invention provides an aerogel blanket with uniform thermal conductivity and degree of hydrophobicity, specifically with excellent degree of hydrophobicity. Specifically, the aerogel blanket may have a short-term degree of hydrophobicity of 4.0% or less and a long-term degree of hydrophobicity of 26.0% or less, preferably a short-term degree of hydrophobicity of 3.5% or less and a long-term degree of hydrophobicity of 25.4%, more preferably a short-term degree of hydrophobicity of 2.5% and a long-term degree of hydrophobicity of 22.0% or less, and even more preferably a short-term degree of hydrophobicity of 2.0% or less and a long-term degree of hydrophobicity of 20.0% or less. In addition, the ratio of the short-term degree of hydrophobicity to the long-term degree of hydrophobicity (short-term degree of hydrophobicity/long-term degree of hydrophobicity) as a percentage may be 15.0% or less, preferably 13.0% or less, more preferably 12.0% or less, and even more preferably 10.0% or less. Here, the short-term degree of hydrophobicity and the long-term degree of hydrophobicity are derived by the following measurement methods.

According to ASTM C1511, a specimen having a size of 25.4 cm x 25.4 cm is floated on distilled water of 21±2°C and a 6.4 mm mesh screen is placed on the specimen to sink the specimen to 127 mm below the surface of the water. 15 minutes (short term) and 96 hours (long term) later, the screen is removed, and when the specimen rises to the surface, the specimen is picked up with a clamp. Thereafter, the aerogel specimen is taken out, and surface water is absorbed onto a wiper for 2 seconds according to ASTM D1763. During the process, the weight of the specimen before the impregnation and the weight of the specimen after the removal of surface water after the impregnation were measured to calculate a weight increase rate, and the average value of three specimens is defined as the short-term degree of hydrophobicity and the long-term degree of hydrophobicity.

The aerogel blanket according to an embodiment of the present invention is manufactured according to the manufacturing method described above, and thus, has an excellent level of degree of hydrophobicity, that is, a very low moisture impregnation rate, and since the moisture impregnation rate does not increase much even when the aerogel blanket is exposed to moisture for a long period of time, the aerogel blanket may have an excellent degree of hydrophobicity, and may further have excellent thermal conductivity.

The aerogel blanket of the present invention may be usefully used as a thermal insulation material, a lagging material, or a non-combustible material for aircrafts, ships, automobiles, and building structures, as well as for plant facilities for insulating and cooling, such as piping and industrial furnaces of various industrial facilities.

### Examples

Hereinafter, examples of the present invention will be described in detail so that those skilled in the art can easily carry out the present invention. The present invention may, however, be embodied in many different forms and is not limited to the examples set forth herein.

### Example 1

Pre-hydrolyzed TEOS (silica content = 20.1 wt%, HTEOS) and ethanol (moisture content 8 wt%) were mixed in a reactor such that a target density is 70 kg/m³ to prepare a silica sol. To this, sodium hydroxide (NaOH) having a concentration of 33% was introduced as a sodium-based base catalyst such that the molar concentration of sodium ions with respect to the volume of the silica sol is 10 mmol/L to prepare a catalyzed silica sol. Glass fiber (Glass fiber mat, 10 mm) was placed as a substrate for a blanket into the reactor containing the catalyzed silica sol to impregnate the silica sol on the substrate for a blanket, and the reactor was left to stand for 1 hour in a sealed state to gel the impregnated silica sol to obtain a wet gel-fiber composite. Thereafter, the temperature was raised to 60° C, and then the reactor was left for 24 hours to proceed with aging.

Thereafter, a solution in which trimethylethoxysilane was diluted to 40 vol% in ethanol (moisture content 8 wt%) was prepared to have the same volume ratio as that of the wet gel-fiber composite, and 50 mmol/L of hydrochloric acid aqueous solution was introduced to the solution to prepare an acidic surface modification solution such that hydrochloric acid in the acidic surface modification solution is 5 equivalents based on the molar concentration of sodium ions of the sodium-based base catalyst. The acidic surface modification solution was introduced to the reactor to proceed with hydrophobization at 60° C for 24 hours.

Finally, oven drying was performed for 1 hour under the conditions of 150°C and atmospheric pressure to manufacture a silica aerogel blanket.

### Examples 2 to 14 and Comparative Examples 1 to 8

A silica aerogel blanket was manufactured in the same manner as in Example 1 except that the conditions of Example 1 were changed to the conditions listed in Table 1 below.

**[Table 1]**

| | Surface modifier concentration (vol%) | HCl equivalent (With respect to base catalyst) | Base catalyst equivalent | Base catalyst type | Aging time | Surface modification time |
|---|---|---|---|---|---|---|
| Example 1 | 40 | 5 | 1.0 | NaOH | 24 | 24 |
| Example 2 | 33 | 5 | 1.0 | NaOH | 24 | 24 |
| Example 3 | 25 | 5 | 1.0 | NaOH | 24 | 24 |
| Example 4 | 20 | 5 | 1.0 | NaOH | 24 | 24 |
| Example 5 | 15 | 5 | 1.0 | NaOH | 24 | 24 |
| Example 6 | 40 | 1 | 1.0 | NaOH | 24 | 24 |
| Example 7 | 40 | 10 | 1.0 | NaOH | 24 | 24 |
| Example 8 | 33 | 1 | 1.0 | NaOH | 24 | 24 |
| Example 9 | 33 | 10 | 1.0 | NaOH | 24 | 24 |
| Example 10 | 25 | 1 | 1.0 | NaOH | 24 | 24 |
| Example 11 | 25 | 10 | 1.0 | NaOH | 24 | 24 |
| Example 12 | 25 | 5 | 1.0 | NaOH | 6 | 18 |
| Example 13 | 25 | 5 | 1.0 | NaOH | 48 | 48 |
| Example 14 | 25 | 5 | 1.0 | SS¹⁾ | 24 | 24 |
| Comparative Example 1 | 40 | 0 | 1.0 | NaOH | 24 | 24 |
| Comparative Example 2 | 33 | 0 | 1.0 | NaOH | 24 | 24 |
| Comparative Example 3 | 25 | 0 | 1.0 | NaOH | 24 | 24 |
| Comparative Example 4 | 25 | 0 | 1.0 | SS | 24 | 24 |
| Comparative Example 5 | 25 | 0 | 3.5²⁾ | Ammonia | 24 | 24 |
| Comparative Example 6 | 25 | 0 | 3.5 | Ammonia | 24 | 24 |
| Comparative Example 7 | 25 | 5 (Nitric acid) | 3.5 | Ammonia | 24 | 24 |
| Comparative Example 8 | 25 | 5 (Nitric acid) | 1.0 | NaOH | 24 | 24 |

| | | | | | | |
|---|---|---|---|---|---|---|
| 1) SS: (Sodium silicate)2) Ammonia input amount: 35 mmol/L | | | | | | |

### Experimental Examples

### 1) Room temperature thermal conductivity (mW/mK) and thickness (mm)

5 samples each having a size of 30 cm X 30 cm were prepared for each blanket in the aerogel blanket manufactured in each of Examples and Comparative Examples. The room temperature (23±5°C) thermal conductivity was measured for each sample using the HFM 436 Lambda equipment of NETZSCH Co., Ltd. At this time, the 5 samples were obtained by cutting at a predetermined interval of 50 cm from the innermost side to the outermost side of an aerogel blanket roll manufactured in each of Examples and Comparative Examples. The thermal conductivity was measured for each of the 5 samples.

As for the thermal conductivity, the heat flow of a sample positioned between a hot plate and a cold plate is measured by a heat flux transducer in the equipment, and through this, a calibration factor (N) may be obtained from a reference material whose thermal conductivity value is known, and from this N value and a measured value of the heat flow of the sample, a calculated value of thermal conductivity may be obtained. In this process, the thickness of the sample was also derived as a measurement value.

### 2) Short-term moisture impregnation rate (wt%)

The moisture impregnation rate of the silica aerogel blanket manufactured in each of Examples and Comparative Examples was measured.

Specifically, according to ASTM C1511, a specimen having a size of 25.4 cm x 25.4 cm was floated on distilled water of 21±2°C and a 6.4 mm mesh screen was placed on the specimen to sink the specimen to 127 mm below the surface of the water. 15 minutes later, the screen was removed, and when the specimen rose to the surface, the specimen was picked up with a clamp and was hung vertically for 60 ± 5 seconds. Thereafter, the weight before the impregnation and the weight after the impregnation were each measured, and the above process was repeated for three specimens per sample to confirm the average value of weight increase rates, which was represented as the moisture impregnation rate when surface water was not removed.

In addition, the aerogel specimen was taken out according to ASTM D1763 and the weight was measured after allowing surface water to be absorbed onto a wiper for 2 seconds. The average value of weight increase rates with respect to weights of three specimens before the impregnation and after the removal of surface water after the impregnation was represented as the moisture impregnation rate when surface water was removed. The lower the moisture impregnation rate, the higher the degree of hydrophobicity of the aerogel blanket.

### 3) Long-term moisture impregnation rate (wt%)

The moisture impregnation rate of the silica aerogel blanket manufactured in each of Examples and Comparative Examples was measured.

Specifically, according to ASTM C1511, a specimen having a size of 25.4 cm x 25.4 cm was floated on distilled water of 21±2°C and a 6.4 mm mesh screen was placed on the specimen to sink the specimen to 127 mm below the surface of the water. 96 hours later, the screen was removed, and when the specimen rose to the surface, the specimen was picked up with a clamp and was hung vertically for 60 ± 5 seconds. Thereafter, the weight before the impregnation and the weight after the impregnation were each measured, and the above process was repeated for three specimens per sample to confirm the average value of weight increase rates, which was represented as the moisture impregnation rate when surface water was not removed.

In addition, the aerogel specimen was taken out according to ASTM D1763 and the weight was measured after allowing surface water to be absorbed onto a wiper for 2 seconds. The weights of three specimens before the impregnation and after the removal of surface water after the impregnation were measured and the average value of weight increase rates was represented as the moisture impregnation rate when surface water was removed. The lower the moisture impregnation rate, the higher the degree of hydrophobicity of the aerogel blanket.

**[Table 2]**

| | Thermal conductivity (mW/mK) | Thickness (mm) | Short-term moisture impregnation rate (wt%) | | Long-term moisture impregnation rate (wt%) | |
|---|---|---|---|---|---|---|
| | | | Surface water not removed | Surface water removal | Surface water not removed | Surface water removal |
| Example 1 | 16.9 | 10.8 | 1.3 | 0.6 | 16.0 | 15.4 |
| Example 2 | 17.4 | 10.8 | 2.1 | 1.1 | 19.7 | 16.2 |
| Example 3 | 17.9 | 11.2 | 1.6 | 1.3 | 19.0 | 15.2 |
| Example 4 | 18.4 | 10.7 | 1.8 | 0.9 | 23.0 | 18.1 |
| Example 5 | 19.6 | 10.0 | 2.6 | 1.2 | 29.5 | 20.7 |
| Example 6 | 21.7 | 10.9 | 2.9 | 1.8 | 30.2 | 21.2 |
| Example 7 | 19.3 | 11.2 | 3.2 | 1.3 | 27.8 | 19.5 |
| Example 8 | 17.6 | 10.7 | 2.7 | 1.5 | 29.6 | 20.5 |
| Example 9 | 20.3 | 10.7 | 4.1 | 2.0 | 27.6 | 20.7 |
| Example 10 | 20.3 | 10.9 | 4.2 | 3.5 | 34.2 | 25.3 |
| Example 11 | 20.7 | 10.6 | 0.5 | 0.2 | 28.7 | 22.0 |
| Example 12 | 18.2 | 10.7 | 1.9 | 1.7 | 24.7 | 18.4 |
| Example 13 | 18.0 | 10.6 | 1.0 | 0.9 | 20.5 | 17.8 |
| Example 14 | 17.8 | 10.6 | 1.0 | 0.7 | 14.8 | 12.5 |
| Comparative Example 1 | 32.4 | 9.8 | 4.5 | 3.4 | 32.2 | 25.5 |
| Comparative Example 2 | 33.8 | 9.9 | 4.6 | 3.5 | 33.4 | 27.0 |
| Comparative Example 3 | 34.2 | 9.8 | 4.8 | 3.8 | 34.4 | 28.4 |
| Comparative Example 4 | 33.2 | 10.0 | 4.2 | 3.4 | 32.5 | 27.1 |
| Comparative Example 5 | 24.2 | 10.2 | 1.4 | 0.9 | 27.2 | 25.7 |
| Comparative Example 6 | 18.9 | 10.5 | 1.2 | 0.6 | 28.8 | 26.4 |
| Comparative Example 7 | 19.9 | 10.4 | 1.2 | 0.9 | 29.6 | 28.6 |
| Comparative Example 8 | 20.2 | 10.3 | 1.8 | 1.4 | 31.6 | 29.6 |

Referring to Table 2, Examples 1 to 14 have low thermal conductivity and low short-term and long-term moisture impregnation rates, and thus, are confirmed to have implemented an excellent effect as heat insulation materials. On the other hand, Comparative Examples 1 to 4 in which hydrochloric acid was not used had high thermal conductivity even when the concentration of the surface modifier was changed, and thus, are confirmed not to be suitable for insulation performance, and also had a poor level of both short-term and long-term degrees of hydrophobicity. Particularly, since moisture penetrated deep inside the aerogel blanket, even when the surface water was removed, there was no significant difference, so that it is confirmed that it is not easy to remove the impregnated moisture. In addition, Comparative Examples 5 and 6 in which an ammonia catalyst was used as in the prior art had thermal conductivity and a short-term degree of hydrophobicity similar to those of Examples, but had a poor long-term degree of hydrophobicity. Also, it was confirmed that a large amount of moisture is impregnated inside rather than on the surface of the aerogel blanket, so it is confirmed that it is difficult to remove moisture.

Furthermore, Comparative Examples 7 and 8 are cases in which nitric acid is used instead of hydrochloric acid in the acidic surface modification solution, and it is confirmed that when nitric acid is used, physical properties are not affected whether a base catalyst of ammonia is used or a base catalyst of sodium hydroxide is used, and through this, it is confirmed that there is a synergistic effect of sodium hydroxide and hydrochloric acid of the acidic surface modification solution.

## Claims

1. A method for manufacturing an aerogel blanket, the method comprising:
1) mixing a silica sol and a sodium-based base catalyst to obtain a catalyzed silica sol;
2) impregnating and gelling the catalyzed silica sol in a substrate for a blanket to obtain a wet gel-fiber composite; and
3) introducing an acidic surface modification solution containing a surface modifier and a chlorine-based acid-induced aqueous solution to the wet gel-fiber composite to hydrophobize the wet gel-fiber composite; and
4) drying the hydrophobized wet gel-fiber composite.

2. The method of claim 1, wherein the sodium-based base catalyst is an aqueous solution containing any one of sodium hydroxide and sodium silicate.

3. The method of claim 1, wherein the silica sol contains a silica precursor and an organic solvent.

4. The method of claim 1, wherein the catalyzed silica sol is introduced in an amount of 80 vol% to 120 vol% based on the volume of the substrate for a blanket.

5. The method of claim 1, wherein the chlorine-based acid-induced aqueous solution is introduced such that a number of moles of acid in the aqueous solution is 0.5 equivalents to 15 equivalents with respect to a number of moles of sodium ions in the sodium-based base catalyst.

6. The method of claim 1, wherein the chlorine-based acid-induced aqueous solution is an aqueous solution containing one or more selected from the group consisting of hydrochloric acid, trimethylchlorosilane, dimethyldichlorosilane, and methyltrichlorosilane.

7. The method of claim 1, wherein the surface modifier is an organosilane compound diluted to 10 vol% to 50 vol% in an organic solvent.

8. The method of claim 7, wherein the organosilane compound is one or more selected from the group consisting of trimethylchlorosilane (TMCS), hexamethyldisilazane (HMDS), methyltrimethoxysilane (MTMS), trimethylethoxysilane (TMES), ethyltriethoxysilane (ETES), and phenyltriethoxysilane (PTES).

9. The method of claim 1, further comprising an aging step after the step 2).

10. The method of claim 9, wherein the aging is performed for 6 hours or more at a temperature of 40°C to 80°C.

11. The method of claim 1, further comprising a washing step using water or an acid aqueous solution after the step 3).

12. The method of claim 1, wherein the drying of the step 4) is performed by an atmospheric pressure drying process at a pressure of 1±0.3 atm and a temperature of 70°C to 200°C.

13. The method of claim 1, wherein the substrate for a blanket is a porous substrate.

## Patentansprüche

1. Verfahren zur Herstellung einer Aerogeldecke, wobei das Verfahren umfasst:
1) Mischen eines Silicasols und eines basischen Katalysators auf Natriumbasis, um ein katalysiertes Silicasol zu erhalten;
2) Imprägnieren und Gelieren des katalysierten Silicasols in einem Substrat für eine Decke, um einen nassen Gel-Faser-Verbundstoff zu erhalten; und
3) Einbringen einer sauren Oberflächenmodifikationslösung, die einen Oberflächenmodifikator und eine säureinduzierte wässrige Lösung auf Chlorbasis enthält, in den nassen Gel-Faser-Verbundstoff, um den nassen Gel-Faser-Verbundstoff zu hydrophobieren; und
4) Trocknen des hydrophobierten nassen Gel-Faser-Verbundstoffs.

2. Verfahren nach Anspruch 1, wobei der basische Katalysator auf Natriumbasis eine wässrige Lösung ist, die eines von Natriumhydroxid und Natriumsilikat enthält.

3. Verfahren nach Anspruch 1, wobei das Silicasol einen Silicavorläufer und ein organisches Lösungsmittel enthält.

4. Verfahren nach Anspruch 1, wobei das katalysierte Silicasol in einer Menge von 80 Vol.-% bis 120 Vol.-%, bezogen auf das Volumen des Substrats für eine Decke, eingebracht wird.

5. Verfahren nach Anspruch 1, wobei die säureinduzierte wässrige Lösung auf Chlorbasis so eingebracht wird, dass eine Anzahl von Molen Säure in der wässrigen Lösung 0,5 Äquivalente bis 15 Äquivalente in Bezug auf eine Anzahl von Molen Natriumionen in dem basischen Katalysator auf Natriumbasis beträgt.

6. Verfahren nach Anspruch 1, wobei die säureinduzierte wässrige Lösung auf Chlorbasis eine wässrige Lösung ist, die eines oder mehrere ausgewählt aus der Gruppe bestehend aus Salzsäure, Trimethylchlorsilan, Dimethyldichlorsilan und Methyltrichlorsilan enthält.

7. Verfahren nach Anspruch 1, wobei der Oberflächenmodifikator eine Organosilanverbindung ist, die auf 10 Vol.-% bis 50 Vol.-% in einem organischen Lösungsmittel verdünnt ist.

8. Verfahren nach Anspruch 7, wobei die Organosilanverbindung eine oder mehrere ausgewählt aus der Gruppe bestehend aus Trimethylchlorsilan (TMCS), Hexamethyldisilazan (HMDS), Methyltrimethoxysilan (MTMS), Trimethylethoxysilan (TMES), Ethyltriethoxysilan (ETES) und Phenyltriethoxysilan (PTES) ist.

9. Verfahren nach Anspruch 1, ferner umfassend einen Alterungsschritt nach dem Schritt 2).

10. Verfahren nach Anspruch 9, wobei die Alterung für 6 Stunden oder mehr bei einer Temperatur von 40 °C bis 80 °C durchgeführt wird.

11. Verfahren nach Anspruch 1, ferner umfassend einen Waschschritt unter Verwendung von Wasser oder einer sauren wässrigen Lösung nach dem Schritt 3).

12. Verfahren nach Anspruch 1, wobei das Trocknen des Schritts 4) durch ein Trocknungsverfahren bei Atmosphärendruck bei einem Druck von 1 ± 0,3 atm und einer Temperatur von 70 °C bis 200 °C durchgeführt wird.

13. Verfahren nach Anspruch 1, wobei das Substrat für eine Decke ein poröses Substrat ist.

## Revendications

1. Procédé de fabrication d'une couverture d'aérogel, le procédé consistant à :
1) mélanger un sol de silice et un catalyseur de base à base de sodium pour obtenir un sol de silice catalysé ;
2) imprégner et gélifier le sol de silice catalysé dans un substrat pour une couverture pour obtenir un composite de gel humide-fibre ; et
3) introduire une solution de modification de surface acide contenant un agent de modification de surface et une solution aqueuse induite par acide à base de chlore dans le composite de gel humide-fibre pour rendre hydrophobe le composite de gel humide-fibre ; et
4) sécher le composite de gel humide-fibre rendu hydrophobe.

2. Procédé selon la revendication 1, dans lequel le catalyseur de base à base de sodium est une solution aqueuse contenant soit un hydroxyde de sodium, soit un silicate de sodium.

3. Procédé selon la revendication 1, dans lequel le sol de silice contient un précurseur de silice et un solvant organique.

4. Procédé selon la revendication 1, dans lequel le sol de silice catalysé est introduit dans une quantité de 80 % en volume à 120 % en volume sur la base du volume du substrat pour une couverture.

5. Procédé selon la revendication 1, dans lequel la solution aqueuse induite par acide à base de chlore est introduite de telle sorte qu'un nombre de moles d'acide dans la solution aqueuse est 0,5 équivalent à 15 équivalents pour un nombre de moles d'ions de sodium dans le catalyseur de base à base de sodium.

6. Procédé selon la revendication 1, dans lequel la solution aqueuse induite par acide à base de chlore est une solution aqueuse contenant un ou plusieurs éléments sélectionnés dans le groupe constitué d'acide chlorhydrique, triméthylchlorosilane, diméthyldichlorosilane et méthyltrichlorosilane.

7. Procédé selon la revendication 1, dans lequel l'agent de modification de surface est un composé organosilane dilué de 10 % en volume à 50 % en volume dans un solvant organique.

8. Procédé selon la revendication 7, dans lequel le composé organosilane est un ou plusieurs éléments sélectionnés dans le groupe constitué de triméthylchlorosilane (TMCS), hexaméthyldisilazane (HMDS), méthyltriméthoxysilane (MTMS), triméthyléthoxysilane (TMES), éthyltriéthoxysilane (ETES) et phényltriéthoxysilane (PTES).

9. Procédé selon la revendication 1, comprenant en outre une étape de vieillissement après l'étape 2).

10. Procédé selon la revendication 9, dans lequel le vieillissement est effectué pendant 6 heures ou plus à une température de 40°C à 80°C.

11. Procédé selon la revendication 1, comprenant en outre une étape de lavage utilisant de l'eau ou une solution aqueuse acide après l'étape 3).

12. Procédé selon la revendication 1, dans lequel le séchage de l'étape 4) est effectué par un processus de séchage à pression atmosphérique à une pression de 1±0,3 atm et une température de 70°C à 200°C.

13. Procédé selon la revendication 1, dans lequel le substrat pour une couverture est un substrat poreux.
